Europäisches Patentamt

European Patent Office

Office européen des brevets

(11) Publication number: **0 280 402**
**A2**

## (12) EUROPEAN PATENT APPLICATION

(21) Application number: 88300606.6

(22) Date of filing: 26.01.88

(51) Int. Cl.⁴: **A23B 4/04** , A23B 7/144 , A23L 1/18

(30) Priority: 26.01.87 NZ 219057
06.10.87 NZ 222071

(43) Date of publication of application:
31.08.88 Bulletin 88/35

(84) Designated Contracting States:
AT BE CH DE ES FR GB GR IT LI LU NL SE

(71) Applicant: **MASSEY UNIVERSITY**

**Palmerston North(NZ)**

Applicant: **THE MINISTRY OF AGRICULTURE AND FISHERIES**
**Gillingham House 101-103 The Terrace**
**Wellington(NZ)**

(72) Inventor: **Deuel, Charlotte Lynn**
**248 Park Road**
**Palmerston North(NZ)**
Inventor: **Barrett, Susan Margaret**
**371 Ruahine Street**
**Palmerston North(NZ)**

(74) Representative: **Seaborn, George Stephen et al**
**c/o Edward Evans & Co. Chancery House**
**53-64 Chancery Lane**
**London WC2A 1SD(GB)**

(54) Puffed food products and methods of making such products.

(57) A method for producing a puffed food product which comprises subjecting a food selected from the group consisting of cereals, fruits, vegetables, fish and meats (whether red or white), formulated protein, formulated carbohydrates, formulated fat, any combination thereof and including gelled formulations thereof to a diffusive gas environment (preferably $CO_2$ under pressure) when said food is at an intermediate moisture level for sufficient time for gas infusion into and preferably throughout the food, thereafter further drying the food and, when the food stuff is at a desired lower moisture content, placing the food in an environment and/or otherwise treating the food to prevent a substantial adsorption of moisture by the food.

The invention also consists in a puffed food product of a moisture content less than 5% by weight that has been prepared from a food selected from the group consisting of cereals, fruits, vegetables, fish, meats (whether red or white), formulated protein, formulated carbohydrates, formulate fat, any combination of any of the foregoing and including gelled formulations thereof the volume of which is not substantially less than the volume it has assumed at an intermediate moisture level, the structure of the food being maintained or expanded by a gas impregnated into the food using a gas environment of at least atmospheric pressure prior to subsequent drying to the desired final moisture content at which it is to be stored.

FIG. 1

## PUFFED FOOD PRODUCTS AND METHODS OF MAKING SUCH PRODUCTS

The present invention relates to improvements in and/or relating to puffed food products and methods of making such products.

Puffed snack products are traditionally produced using vacuum or freeze drying processes which are very expensive and time consuming and thus are used to a limited extent in low cost consumer products.

Fruit snack products have been very popular in recent years. A puffed snack product has additional appeal over intermediate moisture fruit snacks such as dried raisins, sultanas, currants, apricots or apples due to the light crispy texture. Puffed fruit snacks are processed traditionally by drying the fruit to intermediate moisture (15 to 40% and preferably 20-30% by weight), loading onto trays in a vacuum drier, and drying under vacuum (760mm Hg) for 8-16 hours at 60-90°C until a low moisture content of 3% is reached, cooling under vacuum to 20-35°C, opening the dryer and removing the product from the trays. Another process, known as freeze-drying, involves freezing the fruit, loading the product onto trays and drying in a freeze dryer until low moistures are achieved. Both processes are costly due to high operating costs and large capital expenditures.

When heat is applied to a food, mass or moisture is transferred to the atmosphere and the tissue dehydrates. During the initial stages of dehydration, the constant rate period, water vapour is removed at a constant rate. Free water is being removed from the surface of the food. The product does not begin to lose its structure or collapse until drying enters the falling rate period. Shrinkage indicates that there is a progressive receding of the interface between dry material and wet material in the product. The rate of evolution of water vapour falls sharply as the bound water is removed. Solutes are also diffusing with the water vapour and depositing in the outer layer of the product thus causing case hardening. Intermediate moisture foods are removed from the dryer and equilibrated to allow even distribution of moisture within the food. They are then finish dried to low moisture in air dryers or vacuum dryers.

Freeze drying eliminates shrinkage by subliming the moisture under vacuum from ice to gas through the application of heat. Vacuum drying also eliminates shrinkage by puffing the structure under vacuum, removing moisture and solidifying the structure under vacuum cooling.

Shrinkage or collapse of the product has several consequences:

1. The heat and mass transfer rates are reduced due to the dense structure.

2. Bound water removal is slowed requiring more time and energy per unit of water to achieve low moisture levels.

3. An unattractive appearance, hard, crunchy texture and mouthfeel, and limited rehydration in "instant" applications is produced.

The present invention is directed towards a puffed food product and a process for making such products which are believed to provide advantages over existing procedures for providing puffed food products.

As used here and throughout unless modified specifically the term "food" refers to cereals, fruits, vegetables, fish and meats, (whether red or white meats), formulated protein, carbohydrates, fat and any combination thereof and including gelled formulations thereof. The term "intermediate moisture content" relates to that content which a food attains when dried below its normal raw moisture content but not to a low moisture content at which is appropriate for marketing as a puffed snack product. For reformulated or gelled products "intermediate moisture content" refers to a higher content than that to which it is to be dried. In the case of, for example, fruits and vegetables such as peas, onions, apples, peaches, bananas, nectarines, plums, apricots, pears, strawberries, kiwifruit, papaya, pineapple, mango, blueberries and other berries, and currants such an intermediate moisture content is from 15 to 70% by weight while the final moisture content of such a puffed food product is preferably less than (5%) by weight.

As used herein all percentages are given by weight unless indicated to the contrary.

In one aspect the invention consists in a method for producing a puffed food product which comprises subjecting a food of a kind as hereinbefore defined or part thereof (hereinafter "food") to a diffusive gas environment when said food is at an intermediate moisture level (as hereinbefore defined) for sufficient time for gas infusion into and preferably throughout the food, thereafter further drying the food and, when the food stuff is at a desired lower moisture content, placing the food in an environment and/or otherwise treating the food to prevent a substantial adsorption of moisture by the food.

Preferably said gas environment is at least atmospheric pressure.

Preferably the temperature within said gas environment is ambient temperature or is elevated (i.e. 0-90°C).

Preferably said drying beyond said intermediate moisture level is achieved by hot air drying.

Preferably said food is of a fruit or vegetable, cereal, meat, fish or gelled formulated product origin such as for example, peas, onions, apples, bananas, peaches, nectarines, plums, apricots, pears, kiwifruit, papaya, pineapple, mango, strawberries, blueberries or other berries or currants, crabstick type surimi, formulated fruit or vegetable gelled snack.

Preferably said intermediate moisture level is achieved by hot air drying.

Preferably said intermediate moisture level to 15 to 70% by weight dependant on each products optimum level.

Preferably the final lower moisture content is less than 5% by weight.

Preferably said gas environment is rich in a diffusive gas such as carbon dioxide or nitrous oxide.

Preferably carbon dioxide is the most preferred gas.

Preferably the gas environment is at least about 90% carbon dioxide.

In the case of a food such as raisins or sultanas it may be that in their natural state the products are at a said intermediate moisture level in which case no deliberate drying step is required prior to infusion of the product with said gas. Some pre-dehydrated products may need to be reconstituted with water to the desired moisture content.

The method does not exclude the coating or impregnation of the food at any stage with preservative materials and/or flavouring or colouring materials. Indeed it is envisaged that products such as for example pieces of apple could be provided with a coating or impregnation of colours, flavouring or sweetners to produce, for example, a chocolate covered fruit as a light snack.

It is envisaged that some pre-treatment may be required to prevent browning of certain fruits or other foods, for example, dipping in or spraying with a preservative.

Please note that as used herein "puffing", "puffed" or any derivative thereof usually but does not necessarily mean an increase in the volume of the food over that which it possessed at the intermediate moisture level but can also mean that there is not a substantial lessening in its volume when dropped from that intermediate moisture level down to the desired final moisture level.

In a further aspect the present invention consists in a food product that includes as a component thereof a puffed snack product produced by a method in accordance with the present invention.

In a further aspect the present invention consists in a puffed food product of a moisture content less than 5% by weight that has been prepared from a food as hereinbefore defined the volume of which is not substantially less than the volume it has assumed at an intermediate moisture level, the structure of the food being maintained or expanded by a gas impregnated into the food using a gas environment of at least atmospheric pressure prior to subsequent drying to the desired final moisture content at which it is to be stored.

Preferably the gas environment was rich in $CO_2$.

Preferably the food product can be coated in a flavouring and/or coating material, e.g. chocolate.

In a further aspect the present invention consists in, in a sealed plastics container, a puffed food product in accordance with the present invention or provided by a process in accordance with the present invention where said environment is defined within said plastics container.

Preferably said plastics container is a bag of film or laminate with very low water vapour transmission rate (WVTR).

Preferred forms of the present invention will now be described. The present invention involves drying a food to an intermediate moisture content and then infusing a diffusive gas such as carbon dioxide (or for example nitrous oxide) into the cell structure of the food to obtain the best possible results for a particular food type also the control of the moisture content is important as also is the time of exposure to the diffusive gas, the concentration of the diffusive gas, the type of diffusive gas and the temperature of the environment. The process involves hot air drying (preferably rapidly) the product from the intermediate moisture content at which gas infusion takes place to a desired lower moisture preferably less than 5% by weight.

While the theory of the procedure is not fully understood it is believed that the diffusive gas diffuses under certain pressure, time and temperatures into the interstitial spaces and cells of the food by solubilizing readily in the free water present and that through capillary flow and vapour diffusion, the water vapour and carbon dioxide are transported within the piece of food.

The food is at an intermediate moisture content so the liquid that has been displaced from the cells in drying has been replaced by $CO_2$ gas. There is limited solubility of $CO_2$ in the available water at the reduced moisture content so some $CO_2$ is present as gas. The smaller individual gas molecules are free to fill out any empty spaces in the structure and also to associate into larger gas bubbles, thus effecting puffing. The liquid phase becomes supersaturated in dissolved gas and therefore fine gas bubbles can form and grow.

The growth of these bubbles effects puffing. The vapour pressure of carbon dioxide is greater than that of air shown by the bunsen co-efficient $P_H$ so this will cause puffing within the product (refer reference 1).

## Table 1

Bunsen Co-Efficients and Diffusivities in Water of Various Gases

| Gas | Bunsen Co-Efficient at pH | Permeability of Cell Wall to Gas D $(x10^5)$ | Pressure Employed (psig) $P_H$ |
|---|---|---|---|
| Nitrogen | 1.6 | 0.033 | 1 000 |
| Air | 2.0 | 0.041 | 1 000 |
| Carbon Dioxide | 4.6-50 | 1.48 | 25-800 |
| Nitrous Oxide | 66 | 0.91 | 745 |

References

(1) C Judson King, Department of Chemical Engineering, University of California, Berkeley, California 94720 "Pressurized Freezing for Retarding Shrinkage during Drying: A Quantitiative Interpretation".

Definitions

Bunsen Co-Efficient: Volume of gas as measured at 0°C and 0 psig dissolved in 1 volume of water.
Permeability of Cell Wall to Gas: product of the solubility of the gas and the diffusivity of the dissolved gas.
$P_H$: pressure to which system was raised before freezing.

## Table 2

Permeation of Gases through membranes Qualitative Rankings

| Thin Rubber Membranes | Damp Dialysis Tubing |
|---|---|
| 1. $N_{20}$ | 1. $N_{20}$ |
| 2. $CO_2$, Freon 12 | 2. $CO_2$ |
| 3. Helium | 3. Freon 12 |
| 4. Methane | 4. Helium |
| 5. Freon 13 | 5. Methane |
| 6. Nitrogen | 6. Nitrogen, Freon 13 |

Note:    Highest rate of permeation are at top, lowest at bottom. The brackets indicate close rankings.

Reference

Gerhard J Haas and Henry E Prescott Jr, Technical Center, General Foods Corporation, White Plains, New York 10625. "Freezing Under Gaseous Pressure: Effect on Cells and Proposed Mechanism".

Nitrous oxide and carbon dioxide are very soluble in water as they both have high Bunsen co-efficients (Table 1). They also permeat cell walls more readily than other gases as shown by their relatively high D values. They diffuse across membranes well; shown by their rankings in Table 2.

In the process, carbon dioxide and nitrous oxide will very readily diffuse into the interstitial spaces and cells readily crossing cell membranes to enter the cells of the food piece, thus effecting puffing.

The fact that the food is at an intermediate moisture content where cell membranes are still permeable and elastic and some interstitial and intracellular water has been removed means that larger gas bubbles are likely to be formed within the cells and/or interstitial spaces. Thus meaning as the product is subsequently dehydrated (preferably rapidly) to a low moisture content, the structure of the puffed product is maintained and as a result a light crisp texture as defined for the puffed food or snack product is derived.

The advantages of this process are:

1. The capital expenditure, energy usage, and production costs involved in using this invention are less than the traditional vacuum or freeze-drying operations.

2. The drying efficiency is increased in drying from intermediate to low moisture by opening the structure and allowing vapour to diffuse at a faster rate.

3. Colours, flavours, and sweeteners can be added to the food at the intermediate moisture stage thus improving its applications and consumer appeal.

4. Colour improvement. The colour of some puffed products such as apples and bananas is more attractive than the colour of the air dried products.

5. Reconstitution rate improvement.

Air-dried apple dices or wedges (by way of example) which have a light, puffed texture can, for example, be coated with other colours, flavours or sweetners, e.g. chocolate or caramel.

Whatever form of food is chosen it is believed that best results are achieved by insuring the foods are present in a product size appropriate to ensure infusion within an acceptable period and under acceptable conditions.

Also irrespective of whether or not the fruit product is an apple product it should be realised that such products have numerous applications in grain, nut and fruit blends, dessert mixes, cereal mixes, hot cereal mixes, and blended with other puffed fruit snacks. They may be coloured, flavoured or sweetened depending upon application, for example, an apple dice can be coated with strawberry juice concentrate to produce a crisp snack with the flavour and colour of strawberries. The flavouring can occur subsequently to or prior to the drying of the product from the intermediate moisture content. If applied subsequent to such drying careful attention may be required to ensure that any rehydration of the product resulting from such a coating is not detrimental to the product.

It is believed that products having attractive appearance, crispy texture, good flavour and quick rehydration will be created while the product weight and its stability will produce benefits in transportation, handling and storage.

In developing the preferred process of the present invention the following objectives were taken into account and such considerations are also applicable to other foods.

1. To infuse the tissue of the food when at an intermediate moisture of from 15 to 70% by weight with carbon dioxide either static or under pressure less than 4.53 kPa (gauge) and in either ambient or elevated temperatures.

2. To dehydrate the tissue of the food to a low moisture content (less than 5% by weight) using hot air drying and retain the puffed appearance and expanded product volume.

3. To allow the addition of colour, flavour or sweetener to the food to enhance or alter the organoleptic and visual properties of the food.

4. To reduce the costs of manufacturing such a puffed product so that use of the present invention is less costly than vacuum or freeze-drying processes.

5. To develop a more efficient drying process through reduction of labour units and better mass transfer in the product due to the puffing process.

The food is prepared using traditional processes such as washing, peeling, coring, destoning, slicing/dicing, and colour preserving. The food is then dehydrated using hot air at temperatures of 35-120°C to an intermediate moisture level of 15 to 70% by weight moisture. The critical moisture content of the food in question is determined where collapse is minimal and diffusivity of carbon dioxide is optimised. The intermediate moisture food can be equalized in an enclosed environment with possible added heat and moisture until the moisture is evenly distributed in the food piece. Case hardening of the piece exterior discourages gas diffusivity.

The tissue is then exposed to carbon dioxide in an enclosed environment.

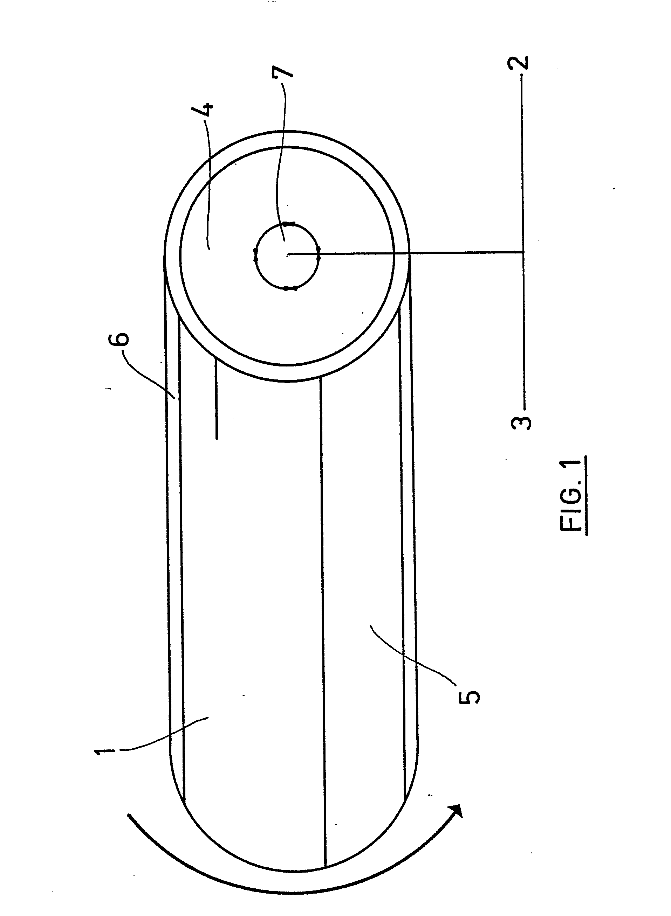

An example of an enclosed environment is a tumbling vacuum vessel. This is depicted in Figure 1. the vessel is a stainless steel, steam jacketed drum (1) which can be tumbled. The product is placed in the drum, a vacuum (2) is pulled to evacuate the vessel and then released with carbon dioxide (3). The vessel is tumbled to contact all the product evenly with the gas. An oxygen reading (4) is taken periodically to monitor the gas environment. The product (5) is contacted with carbon dioxide for the required dwell time. The product is then removed from the drum through the door (7) and air dried to low moisture.

Key to Figure 1

  1. Stainless steel drum.
  2. Vacuum source.
  3. Carbon dioxide source.
  4. Oxygen probe.
  5. Product.
  6. Steam jacket.
  7. Door.

The rate of puffing is dependent on size of product piece temperature of the product, time of exposure to carbon dioxide, the concentration of the carbon dioxide, and moisture of the product. Puffing is observed in the product at ambient temperatures and static pressure but the reaction time is slower than at elevated temperatures. The carbon dioxide can be added in a gaseous form or as dry ice for ease of handling. The tissue expands and puffs and thus increases product volume.

The tissue is immersed in the carbon dioxide atmosphere for sufficient time to allow the $CO_2$ to diffuse into the tissue. It is probable that the gas diffuses into the intercellular spaces and into the cells themselves. The gas dissolves readily in water and likely moves with the water vapour by vapour diffusion until trapped within the cells because of bubble size. Other reactions such as formation of weak acids such as nitrous acid ($HNO_1$ or carbonic acid ($H_2CO_3$) or clathrates (hydrates of gas) may be taking place. Mild fruit acids may be releasing the carbon dioxide within the cells and the bubbles are trapped. The diffusion process may require up to 24 hours.

The product is removed from the treatment vessel and dried to low moisture (less than 5%) in a hot air dryer at temperatures of 35-100°C and high air volumes. The case hardening effect ensures the puffed structure is maintained.

## $CO_2$ DIFFUSION BETWEEN TREATMENT AND DEHYDRATION

The semi-dried $CO_2$ puffed product is in a transitory state only. The gas is not bound substantially within the product. It will diffuse out into the surroundings when out of a $CO_2$ rich atmosphere. This loss of $CO_2$ and reduction in puff was studied in apple dice by exposing intermediate moisture $CO_2$ puffed apples to the atmosphere for varying times. The volume of 100g of product was taken as a measure of the degree of puffing.

The packed volume is measured by:
  (i) Putting a known weight of product and a known weight of fine sand in a cylinder.
  (ii) The cylinder is shaken for 3 minutes until all gaps between the apples are filled with sand.
  (iii) Volume occupied by apples - (volume of apples and sand)
  -(volume of sand).

#### Table 1 - Reduction in puff on standing in air, of apple dice

| Standing time in air (hr) | Volume occupied by 100g of dried product ($cm^3$) |
|---|---|
| 0 | 293 |
| 0.50 | 267 |
| 1.25 | 253 |
| 2.25 | 247 |
| 4.75 | 180 |
| 23.00 | 180 |

The volume of the product decreases with time, i.e. the puffing effect is lost if the product is exposed to air for long periods.

Certain steps must be taken to avoid this loss of $CO_2$ out of the puffed product, before final drying. The delay between puffing and drying must be minimal and/or the product transferred from the puffing vessel to drier under a $CO_2$ atmosphere.

Intermediate Moisture Adjustment

Drying is not the only means of adjusting the moisture content of the product to the optimum for puffing. For some food, a pre-dehydrated product may be reconstituted with water to the desired moisture content. The pre-dehydrated product must be capable of absorbing water again (i.e. not dried down too far). The apples used in experimentation were initially 15 - 17% moisture, but were conditioned up to 22 - 24% moisture. A limit exists to the amount of water that can actually be absorbed back into a dried product without the application of heat. Structural damage occurs during drying and simply adding back water to a dried product, may not restore it to its original form.

Colour Improvement Benefit

A noticeable improvement in colour occurs in the dried $CO_2$ puffed product over the air dried product. It could be that less oxygen is present in the product during drying, so less oxidative deterioration of the pigments occurs. This is a very real advantage for the process.

Reconstruction Improvement Benefit

The $CO_2$ puffed product has improved reconstition over an air dried product. Trials were conducted on dried apples to compare the reconstitution of $CO_2$ puffed and air-dried in water. The results are shown in Table 2.

## Table 2 - Rehydration Ratio Comparison - Vacuum Puffed, Air Dried, CO$_2$ Puffed Apple Slices

Rehydration Ratio = $\dfrac{\text{weight of rehydrated product}}{\text{weight of initial dry product}}$

|  | Time of Rehydration in Minutes | | | | |
|---|---|---|---|---|---|
|  | 5 | 10 | 15 | 20 | 25 |
| **Cold Water** | | | | | |
| Air dried | 1.72 | 1.82 | 1.92 | 2.06 | 2.12 |
| Vacuum Puffed | 1.93 | 2.19 | 2.17 | 2.35 | 2.36 |
| CO$_2$ Puffed | 1.89 | 2.06 | 2.15 | 2.21 | 2.41 |
| **Boiling Water** | | | | | |
| Air dried | 2.11 | 2.46 | 2.52 | 2.56 | 2.67 |
| Vacuum Puffed | 2.30 | 2.61 | 2.67 | 3.04 | 3.17 |
| CO$_2$ Puffed | 2.32 | 2.66 | 2.85 | 2.97 | 3.10 |

Comments:

1. Vacuum puffed and CO$_2$ puffed apples reconstitute at a similar rate.
2. Air dried apples reconstitute much slower.

## FOOD PRODUCT EXAMPLES

Examples for a vegetable (peas), fruit, (apples and bananas), fish and reformulated fish products (crabsticks) are described below. Each product has a different temperature/time profile when exposed to CO$_2$. This is somewhat flexible. A definite temperature-time relationship exists - the higher the temperature during exposure to CO$_2$, the shorter the exposure time. Temperatures between 0-90°C can be used for puffing. For all these examples Table 3 shows the comparison between air dried and CO$_2$ puffed products.

## EXAMPLE I

## Apples, Granny Smith - Carbon Dioxide

Apples, Granny Smith variety, were chosen for the test of this invention. The process is outlined below.

1. Apples are washed, peeled, cored, and cut into wedges.

2. The wedges are treated with an anti-browning solution such as sulphite or an ascorbic acid blend to preserve the colour of the apples.

3. The apples are dried to a moisture content of 22-26% by weight or 24% by weight for the purpose of this example.

4. The apples are equilibrated in a closed container so that moisture is distributed evenly in the product piece.

5. A vacuum is applied to the apples in a closed container. The magnitude of the vacuum used was 700mmHg.

6. The vacuum is released using carbon dioxide as a gas or dry ice. The temperature is elevated to 70°C. The chamber is not under pressure for the purpose of this example. For best results the atmosphere within the container should be at least 90% $CO_2$. A vacuum step appears to be necessary to achieve the best results though lower levels of $CO_2$ (50 - 90%) also produce puffing to a lesser degree.

7. The time of exposure to carbon dioxide is 3 hours.

8. The apples are returned to the hot air dryer and dried at 70°C until the moisture content is less than 3% by weight. Dehumidified air may be necessary in dehydration. The puffed structure is now stabilized.

9. The packaging should be a high moisture barrier bag, glass or plastic to preserve the puff appearance and crispy texture.

## EXAMPLE 2

## Vegetables - Peas

Vegetables may be puffed. Peas are the example given. The process is outlined below.

1. Frozen peas are pricked. Each pea has a pinhole made three-quarters of the way through it.

2. The peas are dipped for 5 minutes in a solution of 0.2% sodium sulphite and 0.6% sodium carbonate, to keep the peas green during drying.

3. After allowing excess dipping solution to drain off, the peas are hot air dried at 80°C to 60-66% moisture.

4. The peas are equilibrated.

5. The peas are put in an enclosed container. The container is evacuated to 600mm Hg vacuum and then released with carbon dioxide gas.

6. The container is heated at 60°C for three hours and then left at ambient for 16 hours.

7. The peas are removed from the container and finish dried at

80°C for 15 minutes
70°C for 30 minutes
60° until below 5% moisture.

8. The dried product is sealed in high moisture barrier bags.

## EXAMPLE 3

## Bananas

The process is outlined below.

1. Bananas are peeled, washed and cut into slices of desired thickness.

2. The slices are treated with an antibrowning solution such as sulphite or an ascorbic acid blend to preserve the colour of the bananas.

3. The bananas are dried to a moisture content of 50 -55% by weight.

4. The bananas are equilibrated in a closed container so that moisture is distributed evenly in the product piece.

5. A vacuum of 700mm Hg is applied to the bananas in a closed container. The vacuum is released with $CO_2$ gas. The temperature of the vessel is that of the ambient surrounding.

6. The time of exposure to carbon dioxide is 24 hours.

7. The bananas are returned to the hot air dryer and dried at 70°C until the moisture content is less than 3% by weight.

8. The bananas should be packaged in high moisture barrier bags, glass or plastic.

EXAMPLE 4

Fish

Frozen deep sea dory fish were used as an example of puffed fish.

The process is outlined below:

1. The fish are gutted, filleted, skinned and washed. Alternatively the frozen fish fillets are thawed. They are washed and cut into the appropriate sized pieces.

2. The fish is dried to a moisture content of 70% by weight.

3. The semi-dried fish is equilibrated in a closed container.

4. A vacuum of 500mm Hg is applied to the semi-dried fish in a closed container. The vacuum is released with $CO_2$ in the form of dry ice or gas. The temperature within the container is ambient.

5. The fish is exposed to the carbon dioxide for 18 hours.

6. The fish is returned to the hot air drier and dried as follows:

60° for 30 minutes
50°C until dry

7. The dried fish is sealed into a high moisture barrier bag.


EXAMPLE 5

Reformed Fish Products (Surimi, Kamaboko)

Crabsticks were puffed as an example for reformed fish products. The process is outlined below.

1. The crabsticks are washed, then sliced using a 5mm blade.

2. The fish is dried (using hot air) to 55 - 60% moisture and left to equilibrate in a closed container.

3. A vacuum of 700mm Hg is applied to the container and released with carbon dioxide.

4. The crabsticks are contacted with the carbon dioxide gas for 20 hours at ambient temperature.

5. The fish is returned to the hot air drier and dried as follows:

70°C for 90 minutes
60°C for 40 minutes
55°C until dry.

6. The dried crabsticks are packaged in a high moisture barrier bag.


EXAMPLE 6: APPLES -NITROUS OXIDE

1. Apples are washed, peeled, cored and cut into wedges.

2. The wedges are treated with an anti-browning solution such as sulphite or an ascorbic acid blend to preserve their colour .

3. The apples are dried in hot air to a moisture content of 22-26% by weight or 24% by weight in this case.

4. The apples are equilibrated in a closed container so that moisture is distributed evenly in the product piece.

5. A vacuum is applied to the apples in a closed container. A vacuum of 700 mmHg is used.

6. The vacuum is released with nitrous oxide gas.

7. The apples are contacted with the $N_2O$ fro 24 hours at ambient temperature.

8. The apples are returned to the hot air dryer and dried at 70°C until the moisture content is less than 3% by weight.

9. The apples are packaged in a high barrier bag to preserve the puffed appearance and crispy texture.

EXAMPLE 7: PAPAYA

1. Very ripe papaya are peeled, diced and washed.

2. The dice are treated with a sulphite solution to prevent browning.

3. The papaya are dried to 55% moisture and then equilibrated in a closed container.

4. The container is then evacuated using a vacuum of 500 mmHg and then flushed with carbon dioxide gas.

5. The papaya is left to puff for 24 hours at ambient temperature.

6. The plice are removed from the $CO_2$ environment and air dried to low moisture.

7. The papaya are packaged in high barrier film to prevent moisture pick up.

Samples of all products in the preceding examples were also air dried without carbon dioxide treatment. The degree of puffing of a sample can be compared by taking the volume occupied by 100g of product. The data is presented in Table 3.

Puffed volumes as compared to air dried products

Table 3: Comparison of air dried versus $CO_2$ puffed product.
Volume occupied by 100 g of product.

| Product | Air Dried ($cm^3$) | $CO_2$ Puffed ($cm^3$) |
|---|---|---|
| Banana | 83 | 90 |
| Fish | 83 | 140 |
| Crabstick | 87 | 130 |
| Peas | 120 | 126 |
| Apples | 180 | 282 |

The readers attention is drawn to U.S. patent number 3833747 which relates to a process for preparing a dehydrated fruit of low hygroscopicity using an explosive puffing process, U.S. patent number 4566376 which discloses a puffing system requiring below atmospheric pressure, U.S. patent number 4515822 which discloses a method which requires a method which requires an encapsulation sequence prior to subsequent treatment to provide a dried simulated hollow fruit product, U.S. patent number 4341803 which requires freeze drying and microwave radiation-drying to provide dry fruit chips and U.S. patent number 4055675 which requires immersion (necessarily under pressure) of bit size pieces of fruit in a pool of liquid carbon dioxide before rapidly releasing the pressure to cause the fruit to become puffed. In relation to the last mentioned U.S. patent puffing in the process of the present invention occurs without any such rapid release of pressure being necessary. Attention is also drawn to British patent number 2019192A which requires aqueous impregnation with a solution of carbon dioxide. The present invention relies on diffusion of a gas into uncollapsed intermediately dried pieces of the food.

Indeed the following features of the present invention should lead to its adaption in products of this type.

1. A dried, puffed product is produced with a uniform, non-shrink appearance and light crispy texture. The structure does not collapse at low moisture contents if stored in a high moisture barrier container.

2. The process does not require the use of a vacuum or freeze dryer to produce this puffed appearance and texture. The equipment is less expensive in capital and production costs.

3. The action produced by the movement of carbon dioxide into the interstitial spaces and cells cause the puffing reaction.

4. The time, temperature, gas concentration, and moisture content of the food have been identified as the important parameters in this process when setting up for particular fruit types.

5. A variety of food including cereals, meat, poultry, fish, fruits and vegetables, formulated protein, carbohydrate, fat, gel with base of any of above may be treated using this process to produce a puffed product.

6. Drying is more efficient due to the open structure of the product.

## Claims

1. A method for producing a puffed food product which comprises subjecting a food selected from the group consisting of cereals, fruits, vegetables, fish, meats (whether red or white), formulated protein, formulated carbohydrates, formulated fat, any combination of any of the foregoing and including gelled formulations thereof to a diffusive gas environment when said food is at an intermediate moisture level for sufficient time for gas infusion into and preferably throughout the food, thereafter further drying the food and, when the food stuff is at a desired lower moisture content, placing the food in an environment and/or otherwise treating the food to prevent a substantial adsorption of moisture by the food.

2. A method of claim 1 wherein said gas environment is at least atmospheric pressure.

3. A method of claim 1 or 2 wherein said intermediate moisture level to 15 to 70% by weight dependant on each products optimum level.

4. A method of claim 1, 2 or 3 wherein the final lower moisture content is less than 5% by weight.

5. A method of any one of the preceding claims wherein said gas environment is rich in a diffusive gas such as carbon dioxide or nitrous oxide.

6. A method of claim 5 wherein the gas environment is at least about 90% carbon dioxide.

7. A food product that includes as a component thereof a puffed snack product produced by a method comprising subjecting a food selected from the group consisting of cereals, fruits, vegetables, fish and meats (whether red or white), formulated protein, formulated carbohydrates, formulated fat, any combination of any of the foregoing and including gelled formulations thereof to a diffusive gas environment when said food is at an intermediate moisture level for sufficient time for gas infusion into and preferably throughout the food, thereafter further drying the food and, when the food stuff is at a desired lower moisture content, placing the food in an environment and/or otherwise treating the food to prevent a substantial adsorption of moisture by the food.

8. A puffed food product of a moisture content less than 5% by weight that has been prepared from a food selected from the group consisting of cereals, fruits, vegetables, fish, meats (whether red or white), formulated protein, formulated carbohydrates, formulated fat, any combination of any of the foregoing and including gelled formulations thereof the volume of which is not substantially less than the volume it has assumed at an intermediate moisture level, the structure of the food being maintained or expanded by a gas impregnated into the food using a gas environment of at least atmospheric pressure prior to subsequent drying to the desired final moisture content at which it is to be stored.

9. A product as claimed in claim 8 wherein the gas environment was rich in $CO_2$.

10. A product of claim 8 or 9 when coated in a flavouring and/or coating material.

11. A marketable commodity comprising in a sealed plastics container, a puffed food product as claimed in claim 7 or 8.

12. A commodity of claim 11 wherein said plastics container is a bag of film or laminate with very low water vapour transmission rate (WVTR).

FIG. 1

0 280 402